(19) Europäisches Patentamt

European Patent Office

Office européen des brevets

(11) EP 1 450 141 A1

(12) EUROPEAN PATENT APPLICATION

(43) Date of publication:
25.08.2004 Bulletin 2004/35

(51) Int Cl.⁷: **G01F 23/292**, G01F 23/284

(21) Application number: 03290334.6

(22) Date of filing: 11.02.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(71) Applicant: **Dubuisson, Jean-Sébastien**
**92400 Courbevoie (FR)**

(72) Inventor: **Dubuisson, Jean-Sébastien**
**92400 Courbevoie (FR)**

(74) Representative: **Michelet, Alain et al**
**Cabinet Harlé et Phélip**
**7, rue de Madrid**
**75008 Paris (FR)**

(54) **Liquid level detector**

(57)     The invention concerns a device for measuring the level of fluids comprising a light source (1) emitting a light beam (2), a beam splitter (3) and an analysis section (4) comprising detection means (5). According to the invention, the device further comprises a hollow rod (6) being partially immersed in a fluid, having an optical index n equal to within 15 percent to the index n' of said liquid, and having a diffusing end (7). An optical lens (8) conjugates, on the one hand, the light source (1) and the diffusing end (7) of the hollow rod (6), and on the other hand, the detection means (5) and said diffusing end (7). The signal provided by the detection means (5) is a function of the height of the emerging part of the hollow rod (6) and therefore provides a measure of the level of the fluid.

FIGURE 1

EP 1 450 141 A1

**Description**

The invention relates to a liquid level detector.

The storage of hazardous liquids or explosive gases requires specific means not only to contain the fluids but also to control their state, the fluid level in a container for example.

The current fluid level probes are usually mounted in a container with a cable connected to the electronics being external to the container. Hence, any electrical component of such probes has to be protected from chemical and physical damage. The current fluid level probes are therefore costly because of their assembly and required protection.

Nevertheless, they may still undergo chemical attacks by many of the substances used in industry and likely to be stored in the containers. Where the operating electrical components are exposed to said fluids, it can bring about dangerous situations.

The current fluid level probes only inform if said probes are in contact with a liquid or not. Therefore, they are mostly used to indicate if a fluid container is being overfilled or not or if the fluid level falls below a specific point. No measure of fluid level in a container other than those two particular cases can be obtained, and dynamical measures, for example, when a container is being partially emptied are simply not feasible with a single probe.

Fluid level measures at specific points of a container may be obtained by using several probes but it still constitutes partial information between two successive probes and is highly expensive.

The purpose of the invention is to remedy the short comings mentioned above and to propose a device for measuring the level of fluids having one or more of the following features and advantages: namely, a fast data acquisition and a high accuracy on the fluid level measure, a continuous measure, a low cost and compact design, a straightforward use, a sole hollow rod is exposed to said fluids, and the device may be used with any type of hazardous liquids within any type of container.

To this end, the invention concerns a device for measuring the level of fluids comprising:

- a light source emitting a light beam,
- a beam splitter,
- an analysis section comprising detection means.

According to the invention, the device further comprises:

- a hollow rod being partially immersed in a fluid, having an optical index n equal to within 15 percent to the optical index n' of said liquid, and having a diffusing end,
- an optical lens conjugating, on the one hand, the light source and the diffusing end of the hollow rod, and on the other hand the detection means in the analysis section and the diffusing end of the hollow rod,
- the signal provided by the detection means being a function of the height of the emerging part of the hollow rod and therefore depending on the level of the fluid.

According to various embodiments, the present invention also concerns the characteristics below, considered individually or in all their technical possible combinations.

- the diffusing end of the hollow rod is a scattering surface,
- an external surface is placed at the diffusing end of the hollow rod to scatter the light beam,
- the detection means comprise a mask, said mask being conjugated with the diffusing end of the hollow rod by the optical lens and transmitting the second and third images of said diffusing end through the optical lens,
- the hollow rod has a cylindrical shape,
- the mask is annular,
- the hollow rod is made of glass,
- the analysis section comprises a synchronous modulation apparatus,
- the light source comprises a diaphragm through which the light beam is emitted, said diaphragm being conjugated with the diffusing end of the hollow rod by the optical lens.

To facilitate further description of the invention, the following drawings are provided in which:

Figure 1 is a schematic view of a fluid level detector not in contact to a fluid, according to a first embodiment of the invention.

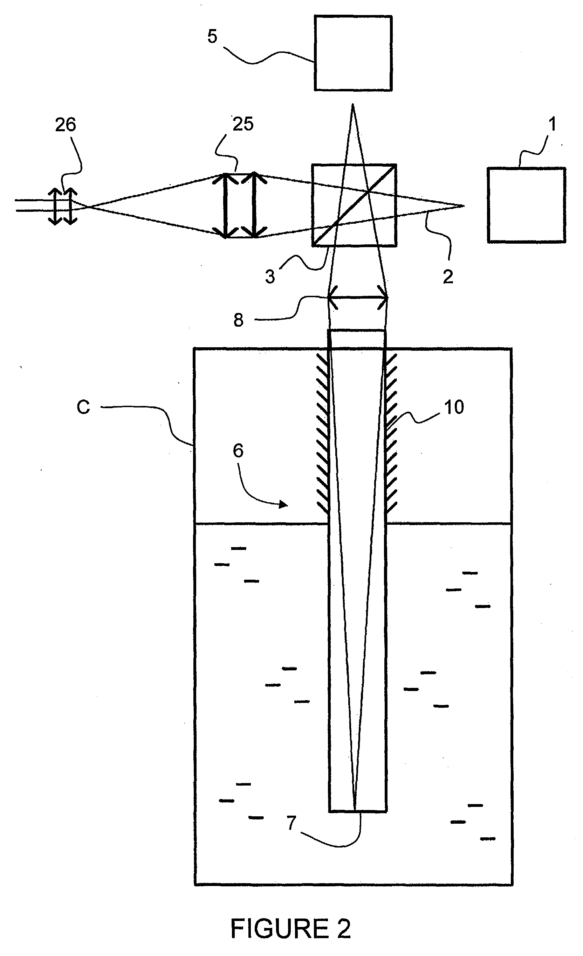

Figure 2 is a schematic view of a fluid level detector in contact with a fluid according to a second embodiment of the invention.
Figure 3 shows the image pattern of the diffusing end of the hollow rod through the optical lens obtained on the detection means for a hollow rod of cylindrical shape (Fig. 3a) and the light propagation in the hollow rod with n reflections (n = 0, 1 ,2, 3) on the reflecting walls (Fig. 3b).

These drawings are provided for illustrative purposes only and should not be used to unduly limit the scope of the invention.

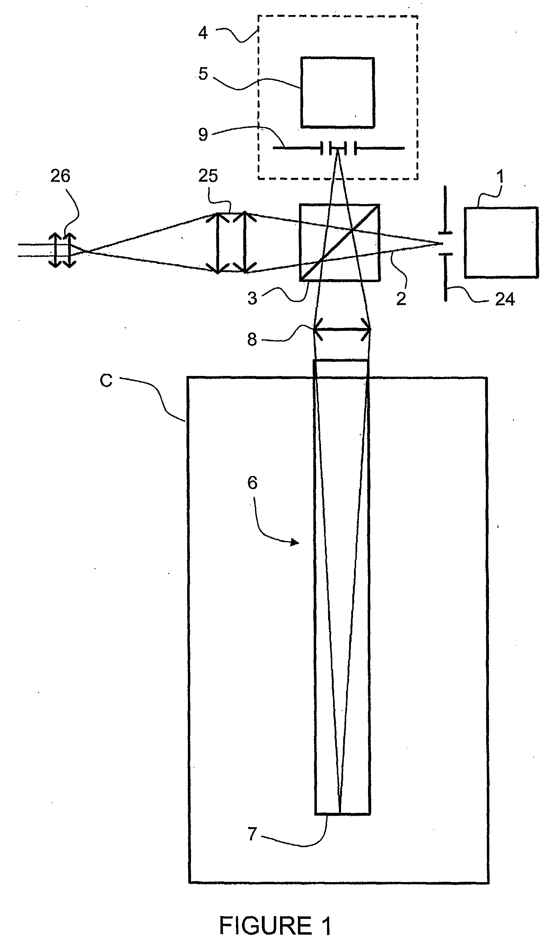

The device for measuring the level of fluids shown in Fig.1 comprises a light source 1 emitting a light beam 2, a beam splitter 3 and an analysis section 4 comprising detection means 5. The light source 1 comprises, for example, a light emitting diode. Said device is not limited in its implementation to a particular fluid and may be used with any fluid (explosive, inflammable ...). The device may also be implemented in any type of fluid containers C, open or not. The detection means 5 comprise for example, a photo-detector. This photo-detector is advantageously a photodiode. The signal provided by the analysis section 4 is sent to a treatment unit for storage and/or analysis. This analysis is preferentially performed in real time for dynamical measurements, for example.

The device also comprises a hollow rod 6. Said rod is partially immersed in the fluid whose level is to be measured. The other end of the hollow rod 6, the emerged part from fluid, is when employed to measure a fluid level in a container, for example, mounted through a port made in the wall of said container C. This end extends outside the container C.

The hollow rod 6 has an optical index n that is equal to within 15 percent to the optical index n' of said fluid. The hollow rod 6 is advantageously made of glass. In an example of implementation, the outer diameter of the glass rod is 22 mm and the inner diameter is 17 mm.

The hollow rod 6 has a diffusing end 7. Either, this diffusing end 7 is the end itself of said rod 6 having a scattering surface or an external surface is placed at the diffusing end 7 of the hollow rod 6 to scatter impinging light beams.

The light beam 2 emitted by the light source 1 passes through the beam splitter 3 and the reflected beam is sent to an optical lens 8. The optical lens 8 conjugates, on the one hand, the light source 1 and the diffusing end 7 of the hollow rod 6, and on the other hand, the detection means 5 and the diffusing end 7 of the hollow rod 6. In an embodiment, the detection means 5 comprise a mask 9. Said mask 9 is placed in front of the detection means 5 and the optical lens 8 conjugates said diffusing end 7 and said mask 9.

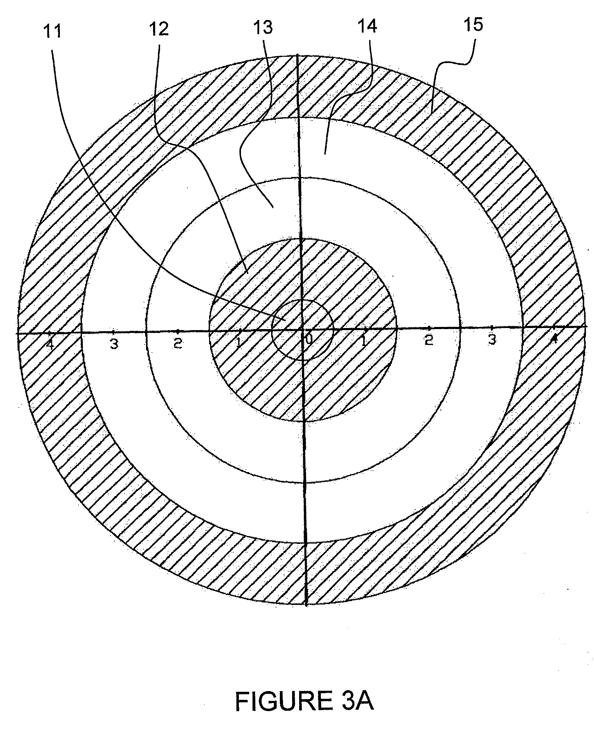

When the hollow rod 6 is not in contact with a fluid, the scattered light beam is collected by the optical lens 8 after undergoing n reflections on the reflecting walls 10 of the hollow rod 6, with n being equal to 0, 1, 2, 3, ... Said scattered light is focused by the optical lens 8 onto the detection means 5 in the analysis section 4 or on the mask 9 placed in front of the detection means 5. The image of the diffusing end 7 through the optical lens 8 formed by the total light reflected back internally by the hollow rod 6 is composed, for example when said hollow rod 6 is a cylindrical rod, of concentric rings corresponding to the different orders of light reflection. The zero order corresponding to the light reflected back by the diffusing end 7 without any reflection on the rod walls 10 forms the central ring 11. The first order corresponds to the next ring 12 formed going outwards from the central ring 11, and so on (Fig. 3a). Only the first four orders (11 — 15) are schematically shown.

When the hollow rod 6 is immersed in a fluid, no reflection takes place on the side walls 10 in contact with the fluid but the light beam is diffused in said fluid. Hence only part of the impinging light beam on the diffusing end 7 will reflect on the emerged part of the hollow rod 6. In other words when a beam is reflected by the reflecting walls 10 of the hollow rod 6, two situations can be found. In the first one, the beam is reflected at a level of the immersed rod, the reflected intensity is then

$$I_{r_1} = k_1 \times I_{i_1}$$

where $I_{r_1}$ is the reflected intensity, $I_{i_1}$ the incident intensity of the beam and $k_1$ is a constant. In the second one, when the beam is reflected at a level of the emerged hollow rod 6, the reflected intensity is then

$$I_{r_2} = k_2 \times I_{i_2}$$

where $I_{r_2}$ is the reflected intensity, $I_{i_2}$ the incident intensity of the beam and $k_2$ is a constant. As $k_2 \gg k_1$ the beam collected by the optical lens 8 depends on the level of the fluid. Therefore, the measure of the power of the collected beam gives a measure of the fluid level. The highest relative effective signal is about $10^{-2}$ of the collected signal. The accuracy on the measure is about $10^{-5}$ in relative. Hence, the accuracy is about a millimetre out of a meter.

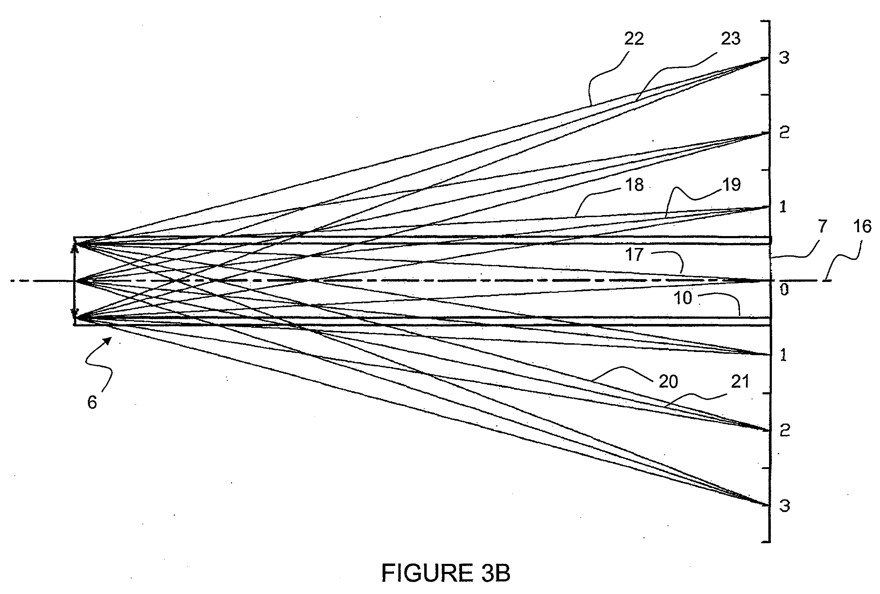

In an embodiment, the mask 9 is an opening masking the direct image and the first image of the diffusing end 7 through the optical lens 8 but transmitting at least its second image. We mean by "direct image" of the diffusing end, the image of the diffusing end through the optical lens, the light beam having undergone no reflection on the reflecting wall of the hollow rod. We also mean by "nth image" of the diffusing end, the image of the diffusing end 7 through the optical lens 8, the light beam having undergone n reflections on the reflecting wall 10 of the hollow rod 6. For example, the "first image" corresponds to the image of the diffusing end 7 through the optical lens 8, the light beam having undergone a single reflection. In a preferential embodiment, the mask 9 only transmits the second and third images of the diffusing end 7 of the hollow rod 6 through the optical lens 8 and the reflecting walls 10. Fig. 3a) shows concentric rings corresponding to the first four orders of light reflection in a cylindrical rod 6. In this particular embodiment, the mask 9 is annular. As shown by hachured rings, only the rings corresponding to the second and third orders of reflection are detected by the detection means 5. Fig. 3b) shows the light propagation in the hollow rod 6 with n reflections (n = 0, 1, 2, 3) on the reflecting walls 10. The axis 16 is a principal axis of symmetry of the hollow rod 6. The light rays 17 that meet in a point merged with the intersection of the principal axis 16 and the diffusing end 7, set out the external limits of the impinging light beams undergoing no reflection on the reflecting walls 10 of the hollow rod 6. Hence, said rays 17 define a cone where any light beam, only propagating into said cone, contributes to the zero order. First sets of light rays 18, 19 define on the side of the hollow rod walls 10, secondary focal points of the optical lens 8 that are the mirror image by said walls 10 of the bottom of said cone. Also, second sets of light rays 20, 21 and third sets of light rays 22, 23 define secondary focal points that are the image of the bottom of said cone respectively by the diameter and 1.5 the diameter of the hollow rod. Said sets of light rays 18-23 delineate with the hollow rod walls 10 acceptance volumes where any impinging light beam only propagating into said volumes contributes respectively to the first order, second order or third order.

The signal provided by the detection means 5 is a function of the height of the emerging part of the hollow rod 6 and therefore depends on the level of the fluid.

We now describe a preferred embodiment of the invention. A light source 1 comprises a diaphragm 24 through which a light beam 2 is emitted. This diaphragm 24 is conjugated with the diffusing end 7 of a hollow rod 6 by an optical lens 8. The hollow rod 6 that is cylindrical is made of glass. The beam splitter 3 is placed on the light path of the beam 2 so that part of said beam is sent through the optical lens 8 into a first half of the rod cavity. Advantageously, half the intensity of the light beam 2 falls onto said mirror 3. The light beam having undergone none or at least a single reflection on the reflecting wall 10 of the hollow rod 6 is sent through the optical lens 8 onto detection means 5. The light beam sent onto analysis section 4 passes through the beam splitter 3, an optical system 25 and reflected light can then be observed through an objective 26. The analysis section 4 also comprises a synchronous modulation apparatus. This apparatus enables to filter out the background noise corresponding to multiple reflections at the interface fluid-hollow rod 6 when the optical indexes are not equal.

**Claims**

1. A device for measuring the level of fluids comprising:

   - a light source (1) emitting a light beam (2),
   - a beam splitter (3),
   - an analysis section (4) comprising detection means (5),

   wherein, it further comprises

   - a hollow rod (6) being partially immersed in a fluid, having an optical index n equal to within 15 percent to the optical index n' of said liquid, and having a diffusing end (7),
   - an optical lens (8) conjugating, on the one hand, the light source (1) and the diffusing end (7) of the hollow rod (6), and on the other hand the detection means (5) in the analysis section (4) and the diffusing end (7) of the hollow rod (6),
   - the signal provided by the detection means (5) being a function of the height of the emerging part of the hollow rod (6) and therefore depending on the level of the fluid.

2. A device according to claim 1, wherein the diffusing end (7) of the hollow rod (6) is a scattering surface.

3. A device according to claim 1, wherein an external surface is placed at the diffusing end (7) of the hollow rod (6) to scatter the light beam.

4. A device according to any one of claims 1 to 3, wherein the detection means (5) comprise a mask (9), said mask (9) being conjugated with the diffusing end (7) of the hollow rod (6) by the optical lens (8) and transmitting the second and third images of said diffusing end (7) through the optical lens (8).

5. A device according to any one of claims 1 to 4, wherein the hollow rod (6) has a cylindrical shape.

6. A device according to claims 4 and 5, wherein the mask (9) is annular.

7. A device according to any one of claims 1 to 6, wherein the hollow rod (6) is made of glass.

8. A device according to any one of claims 1 to 7, wherein the analysis section (4) comprises a synchronous modulation apparatus.

9. A device according to any one of claims 1 to 8, wherein the light source (1) comprises a diaphragm (24) through which the light beam (2) is emitted, said diaphragm (24) being conjugated with the diffusing end (7) of the hollow rod (6) by the optical lens (8).

FIGURE 1

FIGURE 2

FIGURE 3A

FIGURE 3B

European Patent Office

## EUROPEAN SEARCH REPORT

Application Number

EP 03 29 0334

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 35 39 308 A (RUHRMANN WOLFGANG DR) 7 May 1987 (1987-05-07) * column 4, line 12 - column 5, line 53; figures 1-4 * --- | 1-9 | G01F23/292 G01F23/284 |
| A | DE 36 44 866 A (RUHRMANN WOLFGANG DR) 17 March 1988 (1988-03-17) * column 10, line 16 - column 12, line 20; figures 5A,5B,6,7A,7B,7C * --- | 1-9 | |
| A | US 4 711 126 A (HOUPT PIETER M ET AL) 8 December 1987 (1987-12-08) * column 4, line 30 - column 5, line 32; figure 2 * --- | 1-9 | |
| A | US 4 745 293 A (CHRISTENSEN DOUGLAS A) 17 May 1988 (1988-05-17) * column 4, line 66 - column 8, line 51; figures 1,2A,2B,2C,3,4,9A,9B,10 * --- | 1-9 | |
| A | US 5 291 032 A (VALI VICTOR ET AL) 1 March 1994 (1994-03-01) * column 3, line 27 - column 5, line 11; figures 1-4 * --- | 1-9 | TECHNICAL FIELDS SEARCHED (Int.Cl.7) G01F |
| A | US 4 489 602 A (HENNING WOLFRAM) 25 December 1984 (1984-12-25) * column 6, line 3 - column 8, line 29; figures 1-9 * ----- | 1-9 | |

The present search report has been drawn up for all claims

| Place of search | Date of completion of the search | Examiner |
|---|---|---|
| MUNICH | 28 July 2003 | Politsch, E |

EPO FORM 1503 03.82 (P04C01)

## ANNEX TO THE EUROPEAN SEARCH REPORT
## ON EUROPEAN PATENT APPLICATION NO.

EP 03 29 0334

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2003

| Patent document cited in search report | | | Publication date | Patent family member(s) | | Publication date |
|---|---|---|---|---|---|---|
| DE 3539308 | A | | 07-05-1987 | DE 3417023 A1 | | 21-11-1985 |
| | | | | DE 3539308 A1 | | 07-05-1987 |
| DE 3644866 | A | | 17-03-1988 | DE 3629966 A1 | | 17-03-1988 |
| | | | | DE 3644866 A1 | | 17-03-1988 |
| | | | | WO 8801738 A1 | | 10-03-1988 |
| | | | | EP 0279836 A1 | | 31-08-1988 |
| | | | | US 4936681 A | | 26-06-1990 |
| US 4711126 | A | | 08-12-1987 | NL 8500726 A | | 01-10-1986 |
| | | | | NL 8502744 A | | 04-05-1987 |
| | | | | EP 0194732 A2 | | 17-09-1986 |
| | | | | JP 61262638 A | | 20-11-1986 |
| US 4745293 | A | | 17-05-1988 | NONE | | |
| US 5291032 | A | | 01-03-1994 | NONE | | |
| US 4489602 | A | | 25-12-1984 | DE 3144541 A1 | | 26-05-1983 |
| | | | | DE 3272920 D1 | | 02-10-1986 |
| | | | | EP 0078939 A1 | | 18-05-1983 |
| | | | | JP 58087426 A | | 25-05-1983 |

EPO FORM P0459

For more details about this annex : see Official Journal of the European Patent Office, No. 12/82